# EUROPEAN PATENT SPECIFICATION

(11) **EP 1 380 444 B1**
(45) Date of publication and mention of the grant of the patent: **21.12.2005**
(21) Application number: 03445075.9
(22) Date of filing: 16.06.2003
(51) Int. Cl.: B60D 1/14

(54) **A tow bar beam structure**
Trägerstruktur für eine Abschleppstange
Structure de poutre pour une barre de remorquage

(30) Priority: 10.07.2002 SE 0202170
(43) Date of publication of application: 14.01.2004
(73) Proprietor: Monoflex Sweden AB, 734 21 Hallstahammar (SE)
(72) Inventor: Kristensen, Conny, 734 92 Hallstahammar (SE)
(74) Representative: Säfwenberg, Björn

(56) References cited:
- EP-A- 1 213 161
- US-B1- 6 203 078
- US-B1- 6 348 112
- US-B1- 6 402 179

## Description

The present invention concerns a tow bar beam structure intended to extend in a transverse direction of a vehicle and adapted to be attached to the vehicle and to carry a tow bar for connecting a trailer to the vehicle, such as that disclosed in US 6 402 179 B1

Traditionally, beam structures of this kind have been made of bent tubes having circular or square cross sections. When it comes to vehicles that may tow relatively heavy loads, such as so-called SUVs, it is evident that the beam structures must have a correspondingly higher strength. This leads to increased tube dimensions. A tow bar beam structure should have a certain degree of elasticity, so, for that reason, it may not be over dimensioned. Furthermore, bending, particularly of increased dimension tubes, makes the tubes brittle, and this in turn has resulted in fractures already during dynamic endurance tests, so practical use of large dimension tubes is not a practicable way to solve the problem. A further consequence of large dimension tubes is a need for more space in the rear region of a vehicle where the beam structure is to be attached. This, however, is inconsistent with a desire from car manufacturers that the beam structures shall not be visible from behind the vehicle.

It is an object of the present invention, thus, to provide a new and improved tow bar beam structure that meets the requirements stated above.

According to the present invention there is provided a tow bar structure as stated above and having the characteristic features stated in appended claim 1.

A preferred embodiment of the present invention will now be described, reference being made to the accompanying drawings, wherein:
Fig. 1 is a perspective view showing an assembled tow bar structure including a tow bar connected to a beam structure according to the present invention, and further showing its corresponding mounting elements not being a part of the invention;
Fig. 2 is a perspective view of the tow bar structure of Fig. 1 as seen from a vehicle and showing the mounting elements separately;
Fig. 3 is a view of the beam structure without tow bar as seen from behind a vehicle;
Fig. 4 is a section at an enlarged scale taken along line IV-IV in Fig. 3;
Fig. 5 is a side view of a mounting bracket for the tow bar;
Fig. 6 is a view from above of the beam structure of Fig. 3;
Fig. 7 is a view of the beam structure of Fig. 3 as seen from the opposite side;
Figs. 8 and 9 are plan views of the upper and lower flange plates of the beam structure, respectively, both at a somewhat larger scale than Figs. 3, 6 and 7; and
Fig. 10 is a section corresponding to that according to Fig. 4, but showing a variant of a mounting bracket.

The expressions 'transverse', 'upper', 'lower', 'forward', 'backward', 'vertical', 'horizontal', etc. used in this description and the claims refer to the position of the tow bar beam structure in its operative position as mounted onto a vehicle.

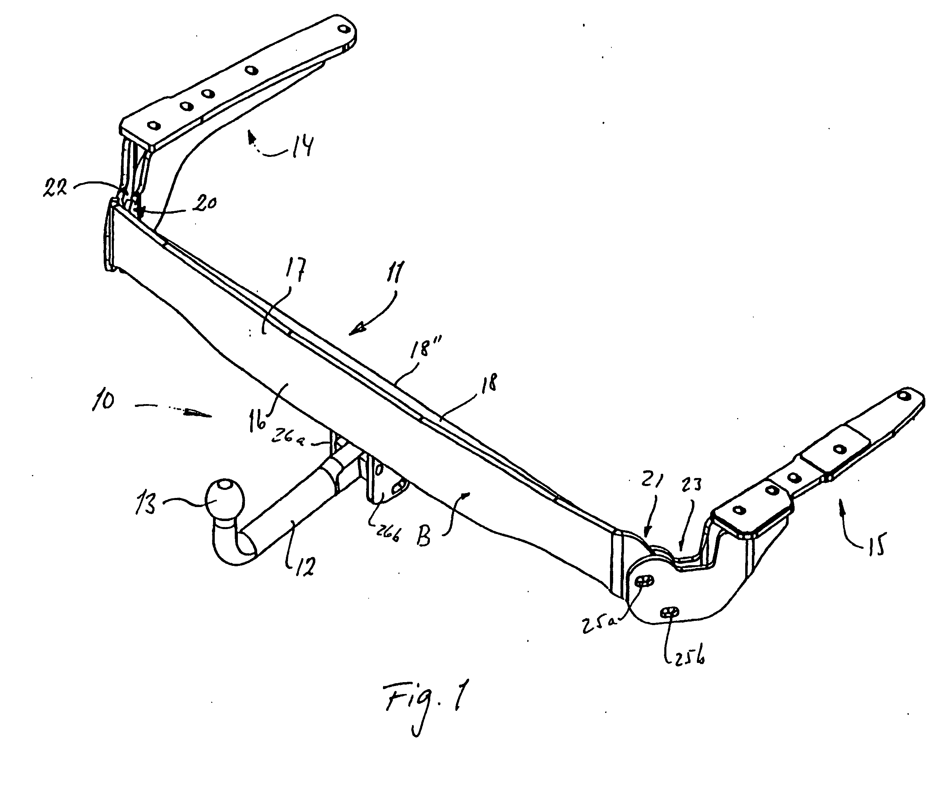

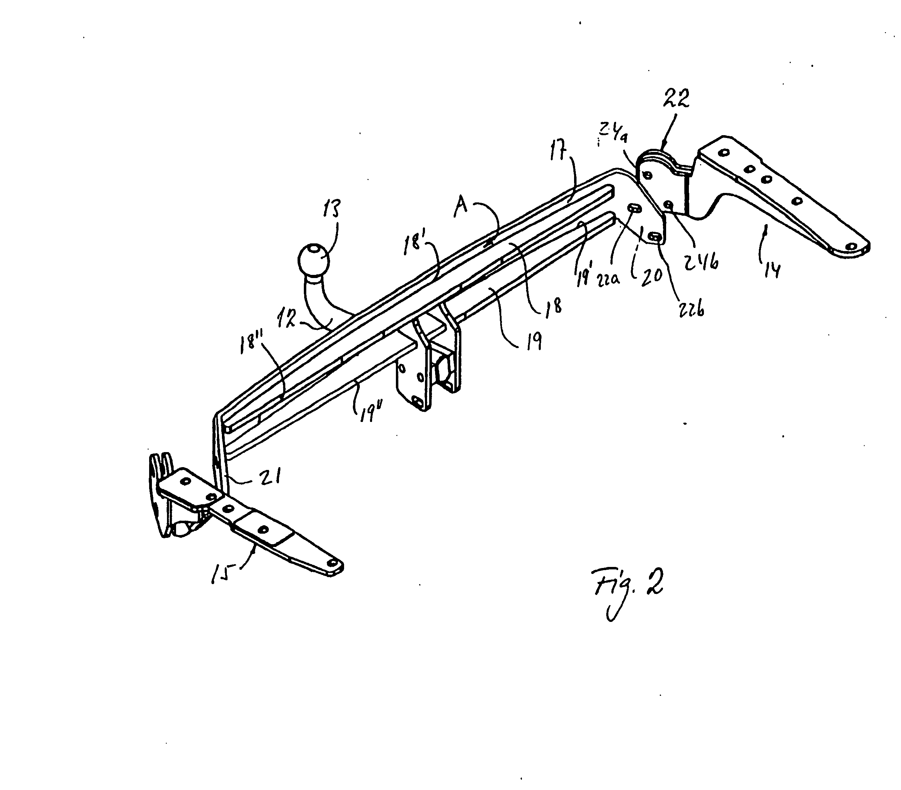

The assembled tow bar structure 10 shown in Figs. 1 and 2 includes a beam structure 11 and a tow bar 12 connected thereto. A ball 13 conventionally ends the tow bar 12. The beam structure extends in the transverse direction of a non-shown vehicle, and its lateral ends are connectable to respective mounting members 14 and 15 which are in turn connectable to lower portions of the car.

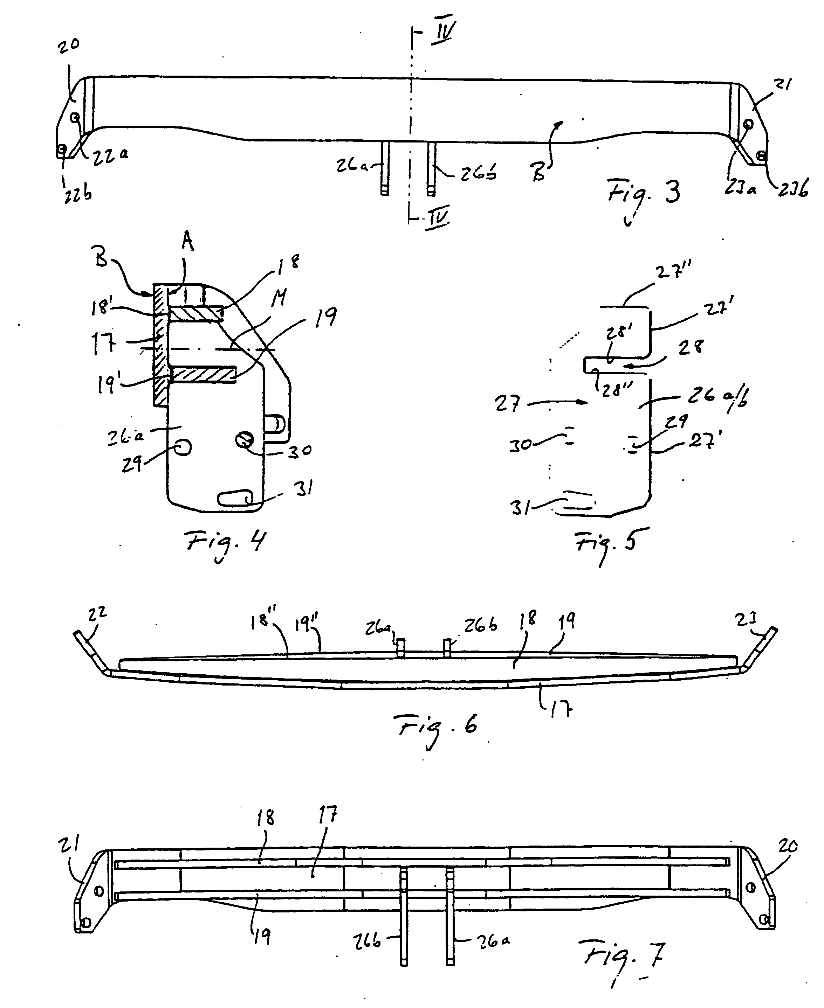

The beam structure 11 is shown separately in Figs. 3, 6 and 7. It comprises a first piece 16 of flat bar steel constituting a substantially vertically oriented web portion 17 of the beam structure. The web portion 17 has a forward side A and a rear side B. One longitudinal edge 18' of a second piece 18 of flat bar steel, separately shown in Fig. 8, is connected, preferably by welding, to the forward side A of the web portion so as to extend along a major portion of the extension thereof and to be located in a substantially horizontal plane below the horizontal mid plane M of the web portion, thereby forming a first flange of the beam structure. One longitudinal edge 19' of a third piece 19 of flat bar steel, separately shown in Fig. 9, is connected, preferably by welding, to the forward side A of the web portion so as to likewise extend along a major portion of the extension thereof and to be located in a substantially horizontal plane above the horizontal mid plane of the web portion, thereby forming a second flange of the beam structure. The two flanges are mutually parallel as seen in Fig. 7.

The free end portions 20, 21 of the web portion 17 are angled to fit into respective mounting claws 22, 23 of the mounting members 14, 15. The end portions have holes 22a, 22b, 23a, 23b corresponding to matching holes 24a, 24b and 25a, 25b, respectively, in the mounting members 14, 15 for receiving non-shown mounting bolts.

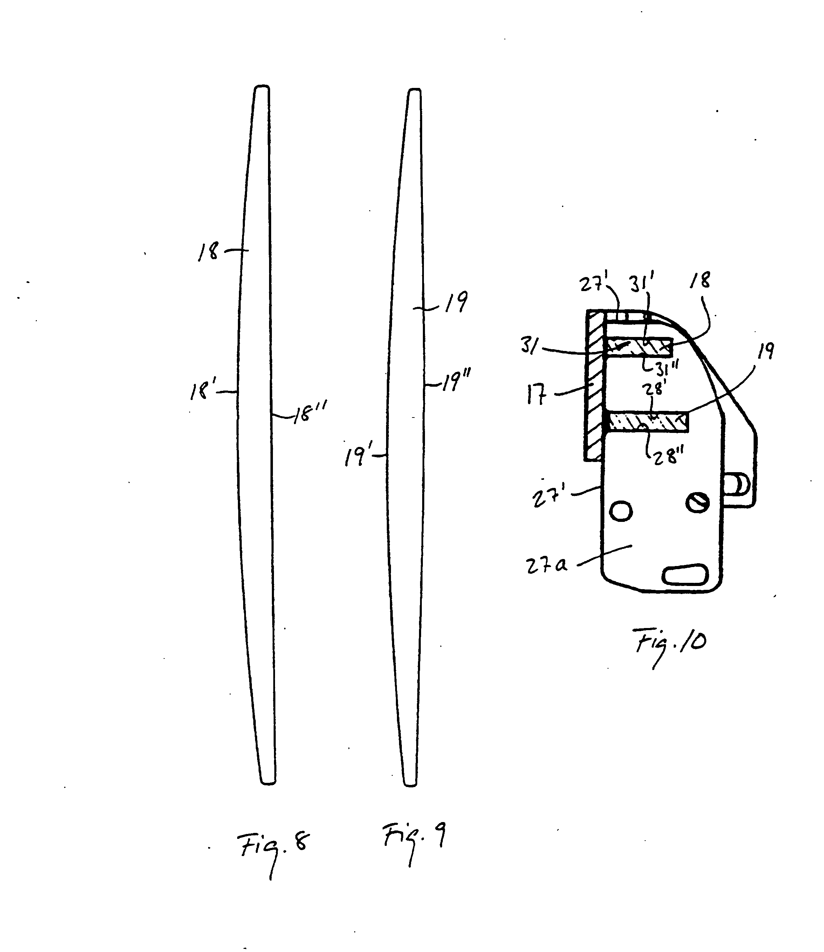

As seen in Fig. 4, the assembled beam structure has a cross section resembling that of a π, including the web portion 17 and the two flanges 18, 19 perpendicularly projecting therefrom, starting at a respective distance from the upper and lower edges 17a, 17b, respectively, of the web portion 17.

The tow bar 12 is conventionally mounted between two equal mounting brackets 26a, 26b separately shown in Fig. 5 and shown attached to the beam structure in Fig. 4. The brackets are equally spaced from a central vertical plane through the beam structure defined by the section line IV-IV in Fig. 3.

Each mounting bracket comprises a substantially rectangular metal plate 27 having a first longer straight edge 27', and a second, shorter straight upper edge 27'', perpendicular to the first edge. The lower edge is slightly rounded and one corner of the plate is cut off to reduce weight. In order to properly transfer forces from the tow bar and the mounting brackets 26a, 26b to the beam structure, each plate has a slot 28 adapted to the dimensions of the lower flange 18 and opening in the respective first edge 27'. The slot is provided at a distance from the respective second edge 27" equal to the vertical spacing between the flanges 18, 19.

The plates are attached to the beam structure with their slots 28 straddling the lower flange 18 and their second, upper edges 27'' abutting the upper flange 19. In this position, also an upper portion of the first, vertical edges 27' abuts a portion of the forward side A of the web portion 17. Consequently, there is an 'F'-like, very close and extended contact between the plates and the beam structure enabling advantageous transfer of forces to the beam structure. Horizontal forces are transferred to the beam structure from edge 27' contacting a major portion of the forward side A of the web portion 17. Vertical forces are transferred to the lower flange 19 from the upper edge 28' of the slot 28. Torsional forces are transferred over all contact surfaces between the plates and the beam structure, particularly the upper and lower edges 28', 28'' of the slot straddling the lower flange 19, and the upper edge 27'' abutting the upper flange 18.

The plates are suitably welded to the parts 17, 18, 19 of the beam structure along the contact surfaces.

The plates have conventional mounting holes 29, 30, 31 for receiving non-shown mounting bolts.

As seen particularly in Figs. 1 and 3, the rear side of the tow bar beam structure is completely smooth and lends itself to be easily mounted in a concealed manner between the body of a vehicle and its rear bumper, only the depending mounting brackets 26a, 26b and the tow bar attached thereto being visible from behind the vehicle. However, should a portion of the web portion be visible from behind the vehicle, the smooth visible surface of the web portion will not considerably affect the overall appearance of the vehicle.

In order to adapt the tow bar beam structure to available space at the rear end of a vehicle, it is often necessary to make it slightly curved as shown particularly in Fig. 6. Consequently, the flange portions 18 and 19 are made to taper towards their free ends as seen particularly in Figs. 2, 6, 8 and 9. This is preferably accomplished by making the respective edge 18', 19' connected to the web portion 17 convexly curved and the respective opposite edge 18'', 19" straight. As seen particularly in Figs. 2 and 6, the web portion 17 is curved to adapt to the configuration of the flange portions and to provide close contact surfaces for welding.

Also in order to adapt the tow bar beam structure to the space available at the rear end of a particular vehicle, it may be necessary to make the flange portions differently wide as shown herein, where lower flange 19 is wider than the upper flange 18.

Fig. 10, finally, shows a variant of a mounting bracket 27a, where a second, upper slot 31 having opposed edges 31', 31'' is provided to straddle the upper flange 18, thereby creating an increased force transmitting contact length between the mounting bracket and the tow bar structure and enabling a correspondingly increased welding length in that also the upper edge 31' of the slot may be welded to the flange 18 apart from the lower edge 31'' corresponding to the upper edge 27' in the embodiment previously described.

## Claims

1. A tow bar beam structure (11) adapted to be attached to a vehicle extending in a transverse direction of the vehicle and to carry a tow bar for connecting a trailer to the vehicle, comprising
- a web portion (15) extending in operation in said transverse direction and comprising a flat bar steel (16) having attachment means (20, 21) at its ends for attachment to the vehicle, the web portion (17) being located in a substantially vertical plane in operation and having a forward side (A) and a horizontal mid plane (M);
- a first flange (18) attached to and extending over a major portion of the extension of the web portion (17) along a first plane above said mid plane (M);
- a second flange (19) attached to and extending over a major portion of the extension of the web portion (17) along a second plane below said mid plane (M), the second flange (19) being parallel to the first flange (18); **characterised by**
- plate-shaped mounting means (26a, 26b) for a tow bar (12), said mounting means having a first straight edge (27') adapted to abut said forward side (A) of the web portion (17), a second straight edge (27''; 31'') adapted to abut said first flange (18), and a first slot (28) adapted to tightly straddle said second flange (19).

2. The tow bar beam structure according to claim 1, **characterized in that** each of said first plane and said second plane is perpendicular to said web portion (17), that said first straight edge (27') and said second straight edge (27'') are mutually perpendicular, and that said first slot (28) is parallel to said second straight edge (27'').

3. The tow bar beam structure according to claim 2, **characterized in that** each of said mounting means (26a, 26b) is welded to said web portion (17) along said first straight edge (27'), to said first flange (18) along said second straight edge (27'') and to said second flange (19) along opposed edges of said first slot (28).

4. The tow bar beam structure according to claim 1, **characterized in that** said second straight edge is a lower edge (31'') of a second slot (31) straddling said first flange (18).

5. The tow bar beam structure according to claim 4, **characterized in that** each of said first plane and said second plane is perpendicular to said web portion (17) and that said first straight edge (27') is perpendicular to said first and second slots (28, 31) which are mutually parallel.

6. The tow bar beam structure according to claim 5, **characterized in that** each of said mounting means (26a, 26b) is welded to said web portion (17) along said first straight edge (27'), to said first flange (18) along opposed edges (31', 31'') of said second slot (31) and to said second flange (19) along opposed edges (28', 28'') of said first slot (28).

7. The tow bar beam structure according to any one of the preceding claims, **characterized by** two parallel mounting means (26a, 26b).

## Patentansprüche

1. Trägerstruktur (11) für eine Abschleppstange, die dazu ausgebildet ist, an einem Fahrzeug quer zur Richtung des Fahrzeuges befestigt zu werden und eine Abschleppstange zu tragen, zur Verbindung eines Anhängers mit dem Fahrzeug, mit
- einem Stegteil (17), das sich beim Betrieb in der Querrichtung erstreckt und eine flache Stahlstange (16) enthält, die an ihren Enden Befestigungsmittel (20, 21) aufweist zur Befestigung an dem Fahrzeug, wobei der Stegteil (17) während des Betriebes in einer im wesentlichen vertikalen Ebene liegt und eine Vorderseite (A) und eine horizontale Mittelebene (M) aufweist;
- einem ersten Flansch (18), der an der Erstreckung des Stegteiles (17) angebracht ist und sich über dessen Hauptteil erstreckt längs einer ersten Ebene oberhalb der Mittelebene (M);
- einem zweiten Flansch (19), der an der Erstreckung des Stegteiles (17) angebracht ist und sich über dessen Hauptteil erstreckt längs einer zweiten Ebene unterhalb der Mittelebene (M), wobei der zweite Flansch (19) parallel zum ersten Flansch (18) ist; **gekennzeichnet durch**
- platten-förmige Befestigungsmittel (26a, 26b) für eine Abschleppstange (12), wobei die Befestigungsmittel eine erste gerade Kante (27') aufweisen, die zum Anschlag gegen die Vorderseite (A) des Stegteiles (17) ausgebildet ist, wobei eine zweite gerade Kante (27"; 31") zum Anschlag gegen den ersten Flansch (18) ausgebildet ist und ein erster Schlitz (28) zum engen Übergreifen des zweiten Flansches (19) ausgebildet ist.

2. Die Trägerstruktur für eine Abschleppstange nach Anspruch 1, **dadurch gekennzeichnet,**
**daß** die erste Ebene und die zweite Ebene parallel zu dem Stegteil sind, daß die erste gerade Kante (27') und die zweite gerade Kante (27") zueinander rechtwinklig sind und daß der erste Schlitz (28) parallel zu der zweiten geraden Kante (27") ist.

3. Die Trägerstruktur für eine Abschleppstange nach Anspruch 2, **dadurch gekennzeichnet,**
**daß** jedes der Befestigungsmittel (26a, 26b) an den Stegteil (17) längs der ersten geraden Kante (27'), an den ersten Flansch (18) längs der zweiten geraden Kante (27") und an den zweiten Flansch (19) längs gegenüberliegender Kanten des ersten Schlitzes (28) angeschweißt sind.

4. Die Trägerstruktur für eine Abschleppstange nach Anspruch 1, **dadurch gekennzeichnet,**
**daß** die zweite gerade Kante eine untere Kante (31") eines zweiten Schlitzes (31) ist, der den ersten Flansch (18) übergreift.

5. Die Trägerstruktur für eine Abschleppstange nach Anspruch 4, **dadurch gekennzeichnet,**
**daß** jede der ersten Ebene und der zweiten Ebene rechtwinklig zu dem Stegteil (17) ist und daß die erste gerade Kante (27) rechtwinklig zu den ersten und zweiten Schlitzen (28, 31) steht, welche wechselseitig parallel liegen.

6. Die Trägerstruktur für eine Abschleppstange nach Anspruch 5, **dadurch gekennzeichnet,**
**daß** jedes der Befestigungsmittel (26a, 26b) an den Stegteil (17) längs der ersten geraden Kante (27'), an den ersten Flansch (18) längs gegenüberliegender Kanten (31', 31") des zweiten Schlitzes (31) und an den zweiten Flansch (19) längs gegenüberliegender Kanten (28', 28") des ersten Schlitzes (28) angeschweißt sind.

7. Die Trägerstruktur für eine Abschleppstange nach irgendeinem der vorhergehenden Ansprüche, **gekennzeichnet durch** zwei parallele Befestigungsmittel (26a, 26b).

## Revendications

1. Structure de poutre pour une barre de remorquage (11) conçue pour être fixée sur un véhicule en s'étendant dans une direction transversale du véhicule et pour porter une barre de remorquage destinée à raccorder une remorque au véhicule, comprenant
- une partie de tirant (17) s'étendant en fonctionnement dans ladite direction transversale et comprenant une barre d'acier plate (16) comportant des moyens de fixation (20, 21) à ses extrémités en vue d'une fixation au véhicule, la partie de tirant (17) étant située dans un plan sensiblement vertical en fonctionnement et comportant un côté avant (A) et un plan intermédiaire horizontal (M),
- un premier renfort (18) fixé à une partie principale de l'extension de la partie de tirant (17) le long d'un plan au-dessus dudit plan intermédiaire (M) et s'étendant sur cette partie principale,
- un second renfort (19) fixé à une partie principale de l'extension de la partie de tirant (17) le long d'un second plan au-dessous dudit plan intermédiaire (M) et s'étendant au-dessus de cette partie principale, le second renfort (19) étant parallèle au premier renfort (18),
**caractérisée par**
- un moyen de montage en forme de plaque (26a, 26b) pour une barre de remorquage (12), ledit moyen de montage ayant un premier bord droit (27') adapté pour buter contre ledit côté avant (A) de la partie de tirant (17), un second bord droit (27'' ; 31'') conçu pour buter contre le premier renfort (18) et une première fente (28) adaptée pour enjamber étroitement ledit second renfort (19).

2. Structure de poutre pour barre de remorquage selon la revendication 1, **caractérisée en ce que** chacun dudit premier plan et dudit second plan est perpendiculaire à ladite partie de tirant (17), **en ce que** ledit premier bord droit (27') et ledit second bord droit (27'') sont mutuellement perpendiculaires, et **en ce que** ladite première fente (28) est parallèle audit second bord droit (27'').

3. Structure de poutre pour barre de remorquage selon la revendication 2, **caractérisée en ce que** chacun desdits moyens de montage (26a, 26b) est soudé à ladite partie de tirant (17) le long dudit premier bord droit (27'), audit premier renfort (18) le long dudit second bord droit (27'') et audit second renfort (19) le long de bords opposés de ladite première fente (28).

4. Structure de poutre pour barre de remorquage selon la revendication 1, **caractérisée en ce que** ledit second bord droit est un bord inférieur (31'') d'une seconde fente (31) à cheval sur ledit premier renfort (18).

5. Structure de poutre pour barre de remorquage selon la revendication 4, **caractérisée en ce que** chacun dudit premier plan et dudit second plan est perpendiculaire à ladite partie de tirant (17) et **en ce que** ledit premier bord droit (27') est perpendiculaire auxdites première et seconde fentes (28, 31) qui sont mutuellement parallèles.

6. Structure de poutre pour barre de remorquage selon la revendication 5, **caractérisée en ce que** chacun desdits moyens de montage (26a, 26b) est soudé à ladite partie de tirant (17) le long dudit premier bord droit (27'), audit premier renfort (18) le long de bords opposés (31', 31'') de ladite seconde fente (31) et audit second renfort (19) le long de bords opposés (28', 28'') de ladite première fente (28).

7. Structure de poutre pour barre de remorquage selon l'une quelconque des revendications précédentes, **caractérisée par** deux moyens de montage parallèles (26a, 26b).
